Europäisches Patentamt

European Patent Office

Office européen des brevets

(19)

(11) Veröffentlichungsnummer : **0 120 127**
**B1**

(12) # EUROPÄISCHE PATENTSCHRIFT

(45) Veröffentlichungstag der Patentschrift : **21.10.87**

(21) Anmeldenummer : **83112297.3**

(22) Anmeldetag : **07.12.83**

(51) Int. Cl.⁴ : **F 16 L 41/00, B 08 B 15/02**

(54) **Gassammelleitung zum Abführen von auf Kokereien anfallenden Emissionsgasen.**

(30) Priorität : **02.03.83 DE 8305891 U**

(43) Veröffentlichungstag der Anmeldung : **03.10.84 Patentblatt 84/40**

(45) Bekanntmachung des Hinweises auf die Patenterteilung : **21.10.87 Patentblatt 87/43**

(84) Benannte Vertragsstaaten : **BE DE IT NL**

(56) Entgegenhaltungen :
**EP-A- 0 032 718
DE-A- 2 326 630
DE-A- 2 604 950
US-A- 4 087 333**

(73) Patentinhaber : **Carl Still GmbH & Co. KG
Kaiserwall 17-23
D-4350 Recklinghausen (DE)**

(72) Erfinder : **Bruns, Engelbert
Rügenstrasse 32
D-4350 Recklinghausen (DE)**
Erfinder : **Lucas, August
Pootendiek 2
D-4354 Datteln-Horneburg (DE)**
Erfinder : **Seidemann, Rudolf
Nikolausweg 14
D-4270 Dorsten 1 (DE)**

(74) Vertreter : **Dahlkamp, Heinrich-Leo, Dipl.-Ing.
c/o Firma Carl Still GmbH & Co. KG Kaiserwall 17 - 23
D-4350 Recklinghausen (DE)**

## Beschreibung

Die Erfindung betrifft eine Gassammelleitung zum Abführen von auf Kokereien anfallenden Emissionsgasen zu einer stationären Gasreinigungseinrichtung mit einem in Längsrichtung an ihrer Oberseite angeordneten Einlaßspalt, der mit einem ebenfalls in Längsrichtung der Gassammelleitung verlaufenden flexiblen Abdeckband abdeckbar ist.

Derartige Gassammelleitungen sind unter anderem aus der DE-A-2 326 630 und der DE-B-2 604 950 bekannt. Aus den Figuren dieser Schriften ist insbesondere ersichtlich, in welcher Weise die Gassammelleitung von einem elastischen Abdeckband abgedeckt ist. Es ist dort auch dargestellt, in welcher Weise dieses flexible Abdeckband durch einen sogenannten Abdeckwagen, der mit den Abführungsstutzen der Absaugehauben verbunden ist, angehoben wird. Dieser Abdeckwagen ist in Längsrichtung der Gassammelleitung verfahrbar. Voraussetzung für die Wirkungsweise dieser Abdeckvorrichtung ist, daß das Abdeckband lose auf der Gassammelleitung aufliegt und von dem Abdeckwagen punktuell angehoben werden kann und wieder aufgelegt werden kann. Es hat sich nun in der Praxis gezeigt, daß bei höheren Windkräften dieses Abdeckband aufgrund seines Eigengewichtes und trotz der Spannung in Längsrichtung nicht mehr sicher und abschließend auf der Gassammelleitung aufgelegt bleibt.

Aufgabe der Erfindung ist es nun, eine geeignete Sturmsicherung für dieses Abdeckband vorzuschlagen, die aber die Verfahrbarkeit des Abdeckwagens nicht beeinträchtigt.

Die Aufgabe wird erfindungsgemäß dadurch gelöst, daß in regelmäßigen Abständen in Längsrichtung seitlich an der Gassammelleitung Sturmsicherungen für das Abdeckband angebracht sind, um ein unkontrolliertes Abheben des Abdeckbandes zu vermeiden, bestehend aus einem oder mehreren waagerecht über dem Abdeckband in Querrichtung der Gassammelleitung eingerichteten Schwenkarmen, die um seitlich an der Gassammelleitung angebrachten senkrechten Achsen schwenkbar sind.

Der erfindungsgemäße Schwenkarm ist in waagerechter Richtung nach links oder rechts auslenkbar. In seiner Grundstellung ist der Schwenkarm dicht über dem Abdeckband quer zur Längsrichtung angeordnet und verhindert, daß bei starken Stürmen das Abdeckband hochgedrückt wird. Der Einlaßspalt an der Oberseite der Gassammelleitung bleibt also immer gasdicht verschlossen.

Es hat sich als zweckmäßig erwiesen, daß die senkrechten Achsen mit den Schwenkarmen an der Seite der Gassammelleitung angebracht sind, die der Verkokungsbatterie abgewandt sind. Dadurch kann der Abdeckwagen mit den Abführungsstutzen der Emissionsgase von den Absaugehauben zur Gassammelleitung ungehindert an der Gassammelleitung entlang verfahren werden.

Es ist dabei insbesondere günstig, wenn die Schwenkarme aus der Querrichtung der Gassammelleitung um mindestens 90° in beide Längsrichtungen auslenkbar sind. Je nach Abstand der senkrechten Achsen von der Gassammelleitung müssen die Schwenkarme entsprechend weit ausgelenkt werden, damit sie aus dem gesamten Arbeitsbereich des Abdeckbandes und des Abdeckwagens entfernt werden.

Die Erfindung sieht weiterhin vor, daß am freien Ende der Schwenkarme beidseitig und/oder am freien Ende Abweisrollen angeordnet sind. Beim Fahren des Abdeckwagens rollen diese Abweisrollen an einem am Abdeckwagen angeordneten Leitblech entlang, so daß der Schwenkarm leicht, und ohne sich zu verhaken, ausgelenkt wird. Erfindungsgemäß können die Schwenkarme mit Hilfe von Drehfedern in ihre Grundstellung quer zur Längsrichtung der Gassammelleitung zurückgeschwenkt und dort gehalten werden. Zusätzliche Arretierungen und Vorrichtungen, um die Schwenkarme nach Vorbeifahren des Abdeckwagens in seine Ausgangslage zurückzubringen, sind auf diese Weise nicht erforderlich.

Es hat sich schließlich erfindungsgemäß als günstig erwiesen, daß auf die senkrechten Achsen zwei Drehfedern mit entgegengesetzten Kraftrichtungen aufgezogen sind. Hierdurch wird auf einfache Weise ein Zurückschwenken des Schwenkarmes mit gleicher Kraft aus beiden Auslenkrichtungen in die Grundstellung bewerkstelligt.

Wenn genügend Platz zur Verfügung steht, können auch an beiden Seiten der Gassammelleitung Schwenkarme angeordnet sein, die jedoch vergleichsweise kürzer ausgeführt sein können.

Eine besonders einfache und kostengünstige Ausführungsform der Erfindung sieht vor, daß die Schwenkarme bei der Auslenkung aus ihrer Grundstellung auf einer kreisbogenförmigen, schräg ansteigenden Fläche geführt und angehoben werden und daß die Fläche mit kleinem Radius um die senkrechte Achse herum angeordnet ist. Auf diese Weise wird insbesondere der Schwenkarm während der Auslenkung etwas angehoben und läßt sich ungehindert über dem Abdeckband bewegen. Andererseits könnte der Schwenkarm sogar in seiner Grundstellung auf dem Abdeckband aufliegen.

In diesem Zusammenhang hat es sich als günstig erwiesen, daß auf der senkrechten Achse Druckfedern angeordnet sind, die den Schwenkarm senkrecht nach unten und damit nach dem Vorbeifahren des Gasüberleitwagens in die Ausgangslage zurückdrücken. Neben dem Eigengewicht des Schwenkarm unterstützen also die Druckfedern jeweils das Zurückschwenken des Schwenkarmes in seine Grundstellung.

Die Erfindung wird anhand der beigefügten fünf Figuren beispielsweise näher erläutert.

Figur 1 ist ein Querschnitt durch einen Teil das Gassammelleitung sowie eine Ansicht der erfindungsgemäßen Sturmsicherung.

Figur 2 zeigt eine Draufsicht auf die Schwenkarme und ihre Haltevorrichtungen an der Gassammelleitung.

Figur 3 zeigt eine Draufsicht auf die gesamte Einrichtung mit einseitiger Anordnung der Schwenkarme.

Figur 4 zeigt eine Draufsicht auf die gesamte Einrichtung mit beidseitiger Anordnung der Schwenkarme.

Figur 5 zeigt ähnlich wie Figur 1 eine Ausführung der erfindungsgemäßen Sturmsicherung.

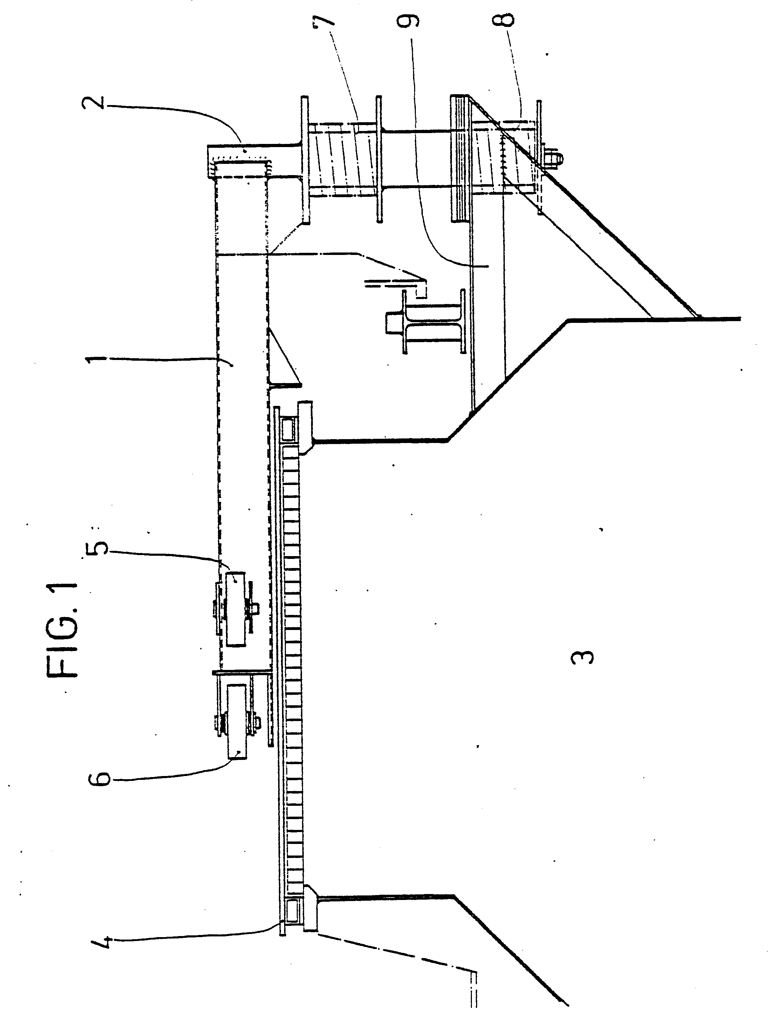

Die Gassammelleitung (3) ist gemäß Figur 1 durch das flexible Abdeckband (4) nach oben verschlossen.

Zum Einleiten der Emissionsgase wird dieses Abdeckband (4) von einem Gasüberleitwagen (10) in einer Schleife angehoben, unter der über einen Abführungsstutzen die Emissionsgase von einer Absaugehaube in die Gassammelleitung (3) gelangen. In der übrigen Betriebszeit ist es Aufgabe der erfindungsgemäßen Schwenkarme (1), (101) zu verhindern, daß das Abdeckband beispielsweise durch Sturm abhebt und somit unkontrollierte Spalte zwischen Gassammelleitung und Abdeckband entstehen, die ein Austreten von Emissionsgasen und Störungen an den Gasreinigungsanlagen zur Folge haben können. Die Schwenkarme (1), (101) sind in regelmäßigen Abständen in Längsrichtung der Gassammelleitung (3) so dicht wie möglich über dem Abdeckband (4) quer zum Verlauf der Gassammelleitung (3) bzw. zur Verfahrrichtung des Gasüberleitwagens (10) installiert.

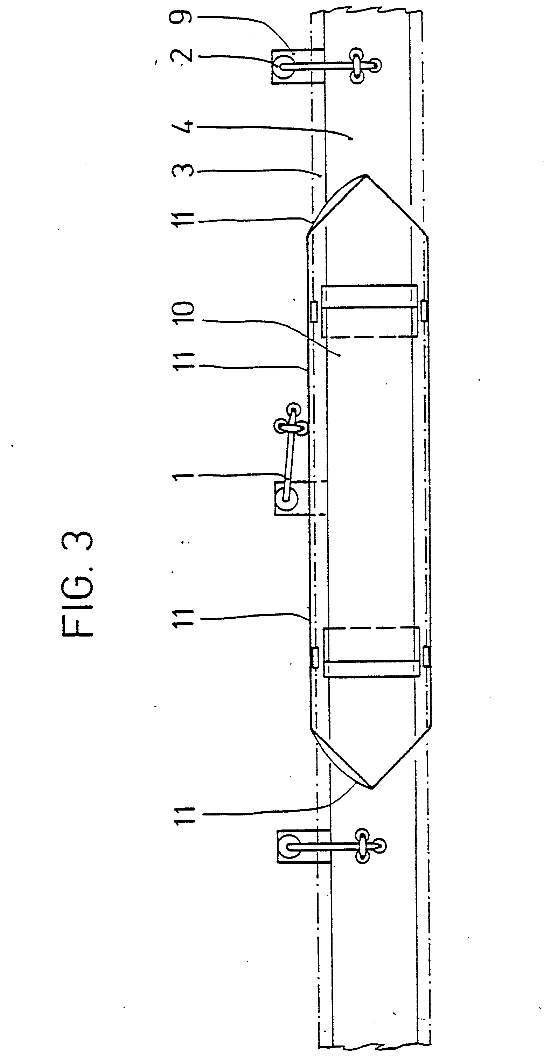

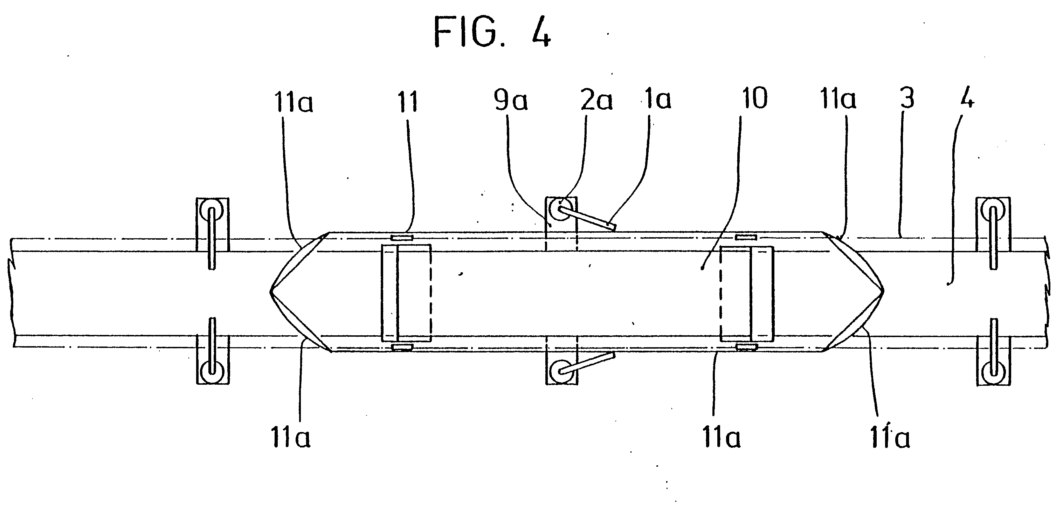

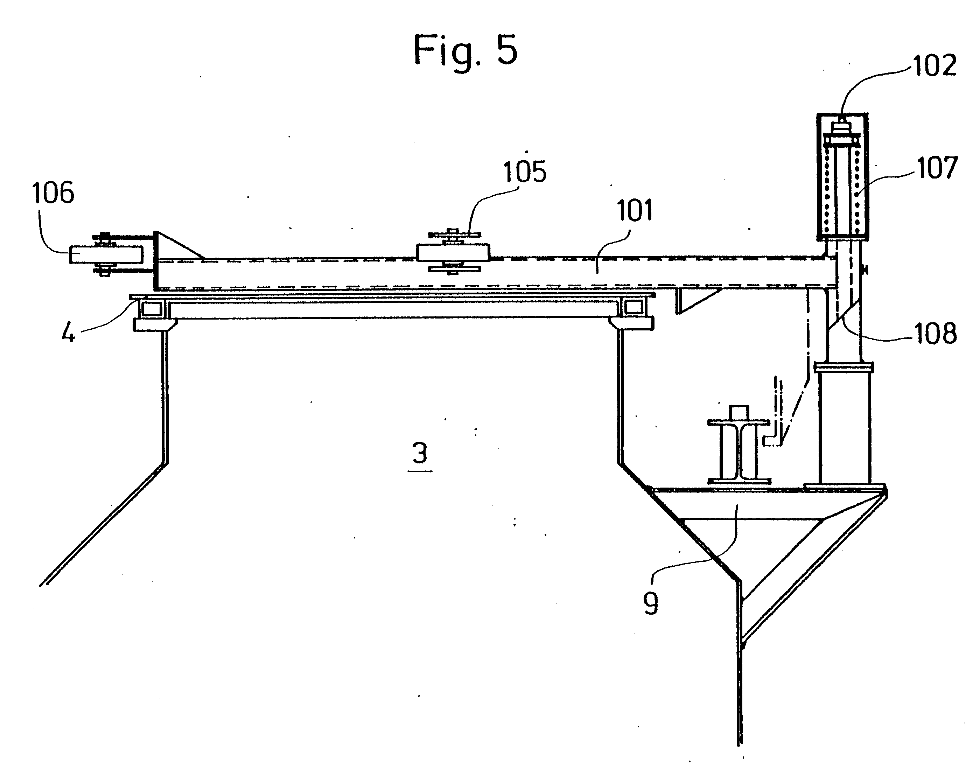

Um die Bedienung der Öfen einer Koksofenbatterie durch den Gasüberleitwagen (10) und das dazu erforderliche Verfahren oberhalb der Gassammelleitung (3) nicht zu behindern, werden die Schwenkarme (1), (101) entsprechend der Figur 3 durch Leitbleche (11) am Gasüberleitwagen (10) aus ihrer Grundstellung quer zur Gassammelleitung um mindestens 90° in beiden Verfahrrichtungen ausgelenkt. Zu diesem Zweck sind die senkrechten Zapfen (2), (102) der Schwenkarme (1), (101) drehbar auf Haltevorrichtungen (9) gelagert. Diese sind gemäß Figur 3 und 5 als Konsolen ausgebildet, so daß die Drehpunkte der senkrechten Zapfen (2), (102) außerhalb des erforderlichen Freiprofils zum Verfahren des Gasüberleitwagens (10) liegen. Abhängig von den räumlichen Verhältnissen auf einer Anlage werden die Schwenkarme (1), (101) entweder nach den Figuren 1, 3 und 5 auf einer Seite der Gassammelleitung (3), und zwar vorzugsweise auf der der Koksofenbatterie abgewandten Seite, oder nach der Figur 4 auf beiden Seiten der Gassammelleitung (3) installiert. Während die Schwenkarme (1), (101) der einseitigen Anordnung in ihrer Länge auf die gesamte Breite des Abdeckbandes (4) ausgelegt sein müssen, können sich die Schwenkarme (1a) auf die Absicherung der Randzonen des Abdeckbandes (4) beschränken.

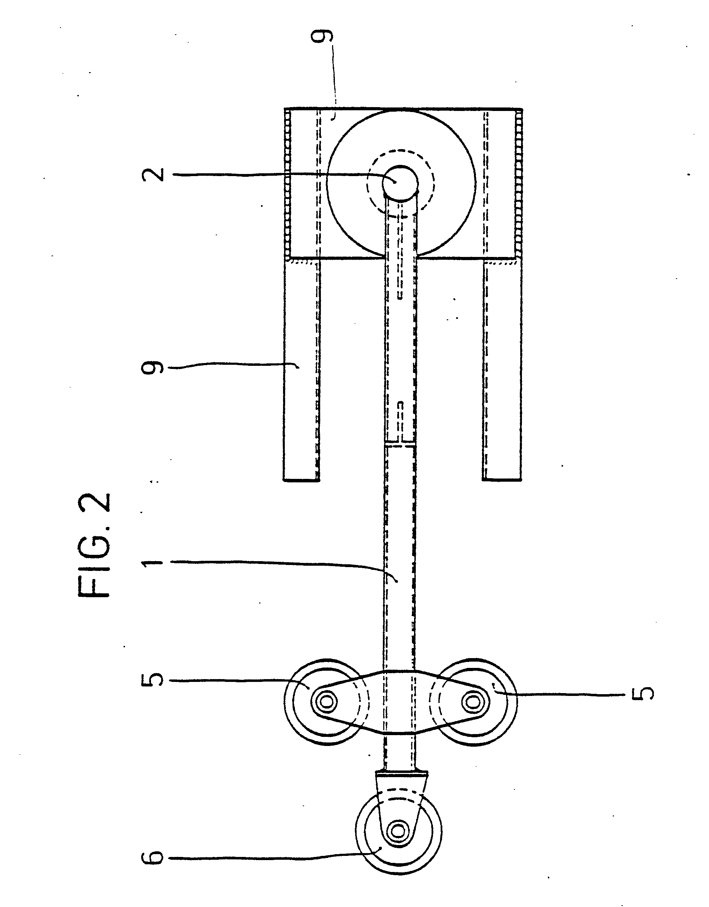

Die am Gasüberleitwagen (10) angebrachten Leitbleche (11) werden beim Verfahren mit den Abweisrollen (5), (6) nach Figur 1 und 2 bzw. mit den Abweisrollen (105), (106) nach Figur 5 in Kontakt gebracht und darüber die Schwenkarme (1), (101) in der jeweiligen Verfahrrichtung des Gasüberleitwagens ausgelenkt, indem die Abweisrollen (5), (6) bzw. (105), (106) an den Leitblechen (11) entlangrollen. Dieses Auslenken um mindestens 90° erfolgt gegen den Widerstand von Drehfedern (7), (8), die nach dem Vorbeifahren des Gasüberleitwagens (10) die Schwenkarme (1), (101) in ihre Grundstellung quer zur Längsrichtung der Gassammelleitung (3) zurückschwenken und dort halten. Da der Gasüberleitwagen (10) in zwei entgegengesetzten Richtungen über die Gassammelleitung (3) verfährt, werden die Schwenkarme (1), (101) auch in entgegengesetzten Richtungen um je mindestens 90° geschwenkt, so daß der gesamte Schwenkradius mindestens 180° beträgt. Um die Schwenkarme (1), (101) aus beiden Auslenkrichtungen mit gleicher Kraft in die Grundstellung zurückzubringen, sollen erfindungsgemäß Drehfedern (7), (8) mit entgegengesetzten Kraftrichtungen installiert werden.

Figur 5 zeigt außerdem eine konstruktive Lösung, durch die die Schwenkarme (101) in ihrer Grundstellung auf dem Abdeckband (4) aufliegen, womit eine bessere Abdichtung gewährleistet wird. Der Schwenkvorgang in der vorher beschriebenen Weise wird dadurch ohne Reibungskontakt zwischen Abdeckband (4) und Schwenkarmen (101) möglich, daß die Schwenkarme bei der Auslenkung durch den Gasüberleitwagen gleichzeitig angehoben werden. Dies geschieht dadurch, daß der Drehpunkt kreisbogenförmige, schräg ansteigende Flächen (108) um die senkrechte Achse (102) herum aufweist. Durch die Auslenkung werden diese Flächen (108) gegensinnig verlagert und damit die Höhenposition der Schwenkarme (101) verändert, d. h. der Abstand zum Abdeckband (4) bei der Auslenkung vergrößert. Bei dieser Lösung können die Schwenkarme (101) durch Druckfedern (107) nach dem Vorbeifahren des Gasüberleitwagens (10) aus der Auslenk- in die Grundstellung zurückgeführt werden. Die Druckfedern (107) sind dazu auf der senkrechten Achse (102) der Schwenkarme (101) angeordnet und unterstützen durch ihre Druckkräfte die Abwärtsbewegung der Schwenkarme (101) zu ihrer Grundstellung und Auflage auf dem Abdeckband (4) bzw. quer zur Längsrichtung der Gassammelleitung (3).

Bezugszeichenliste

(1) Schwenkarm einseitig
(1a) beidseitige Schwenkarme
(2) senkrechte Achse für einseitig angeordnete Schwenkarme
(2a) senkrechte Achse für beidseitig angeordnete Schwenkarme
(3) Gassammelleitung
(4) Abdeckband
(5) Abweisrollen seitlich
(6) Abweisrollen am freien Ende der Schwenkarme (1)
(7) Drehfedern

(8) Drehfedern

(9) Haltevorrichtung für die Schwenkarme (1) und ihre senkrechten Achsen (2)

(9a) Haltevorrichtung für beidseitige Schwenkarme (1a) und ihre senkrechten Achsen (2a)

(10) Gasüberleitwagen

(11) Leitbleche für die Abweisrollen

(11a) Leitbleche für die Abweisrollen

(101) Schwenkarme einseitig

(102) senkrechte Achse für einseitig angeordnete Schwenkarme

(105) Abweisrollen seitlich

(106) Abweisrollen am freien Ende der Schwenkarme (101)

(107) Druckfeder

(108) schräg ansteigende Fläche


**Patentansprüche**

1. Gassammelleitung (3) zum Abführen von auf Kokereien anfallenden Emissionsgasen zu einer stationären Gasreinigungseinrichtung mit einem in Längsrichtung an ihrer Oberseite angeordneten Einlaßspalt, der mit einem ebenfalls in Längsrichtung der Gassammelleitung verlaufenden flexiblen Abdeckband (4) abdeckbar ist, dadurch gekennzeichnet, daß in regelmäßigen Abständen in Längsrichtung seitlich an der Gassammelleitung (3) Sturmsicherungen für das Abdeckband (4) angebracht sind, um ein unkontrolliertes Abheben des Abdeckbandes zu vermeiden, bestehend aus einem oder mehreren waagerecht über dem Abdeckband (4) in Querrichtung der Gassammelleitung (3) eingerichteten Schwenkarmen (1, 101), die um seitlich an der Gassammelleitung (3) angebrachte senkrechte Achsen (2, 102) schwenkbar sind.

2. Gassammelleitung nach Anspruch 1, dadurch gekennzeichnet, daß die senkrechten Achsen (2, 102) an der Seite der Gassammelleitung (3) angebracht sind, die der Verkokungsbatterie abgewandt ist.

3. Gassammelleitung nach Anspruch 1 oder 2, dadurch gekennzeichnet, daß die Schwenkarme (1, 101) aus der Querrichtung der Gassammelleitung (3) um mindestens 90° in beide Längsrichtungen auslenkbar sind.

4. Gassammelleitung nach Anspruch 1, 2 oder 3, dadurch gekennzeichnet, daß am freien Ende der Schwenkarme (1, 101) beidseitig oder an dem freien Ende Abweisrollen (5, 105, 6, 106) angeordnet sind.

5. Gassammelleitung nach den Ansprüchen 1 bis 4, dadurch gekennzeichnet, daß die Schwenkarme (1) mit Hilfe von Drehfedern (7, 8) in ihre Grundstellung quer zur Längsrichtung der Gassammelleitung zurückschwenkbar sind und dort gehalten sind.

6. Gassammelleitung nach Anspruch 5, dadurch gekennzeichnet, daß auf die senkrechten Achsen (2) zwei Drehfedern (7, 8) mit entgegengesetzten Kraftrichtungen aufgezogen sind.

7. Gassammelleitung nach den Ansprüchen 1 und 3 bis 6, dadurch gekennzeichnet, daß an beiden Seiten der Gassammelleitung Schwenkarme (1a) aus der Querrichtung der Gassammelleitung (3) um mindestens 90° in beiden Längsrichtungen auslenkbar angeordnet sind.

8. Gassammelleitung nach den Ansprüchen 1 bis 7, dadurch gekennzeichnet, daß die Schwenkarme (101) bei der Auslenkung aus ihrer Grundstellung aus einer kreisbogenförmigen, schräg ansteigenden Fläche (108) geführt und angehoben werden und daß die Fläche mit kleinem Radius um die senkrechte Achse (102) herum angeordnet ist.

9. Gassammelleitung nach Anspruch 8, dadurch gekennzeichnet, daß auf der senkrechten Achse (102) Druckfedern (107) angeordnet sind, die den Schwenkarm (101) senkrecht nach unten und damit nach dem Vorbeifahren des Gasüberleitwagens (10) in die Ausgangslage zurückdrücken.


**Claims**

1. Gas collecting duct (3) for discharge of emission gases evolving on coking plants to a stationary gas cleaning facility equipped with an inlet gap positioned in longitudinal direction on said gas collecting duct's upper side, said inlet gap capable of being covered by a cover belt (4) also extending in longitudinal direction to said gas collecting duct, characterized in that antistorm locks to secure said cover belt are mounted at regular spacings in longitudinal direction laterally to said gas collecting duct so as to prevent a noncontrollable lifting of the cover belt, said antistorm locks consisting of one or more swivel arm(s) (1, 101) mounted horizontally over the cover belt (4) in transverse direction to the gas collecting duct (3), said swivel arms being swingable around vertical axles (2, 102) mounted laterally to the gas collecting duct (3).

2. Gas collecting duct in accordance with claim 1, characterized in that the vertical axles (2, 102) are mounted at that side of the gas collecting duct (3), which is averted from the coking battery.

3. Gas collecting duct in accordance with Claim 1 or 2, characterized in that the swivel arms (1, 101) are capable of being swung out by at least 90° from the transverse direction of said gas collecting duct (3) into both longitudinal directions.

4. Gas collecting duct in accordance with Claim 1, 2 or 3, characterized in that deflector rollers (5, 105, 6, 106) are mounted at the free end of said swivel arms (1, 101) on both sides or at the free end tip.

5. Gas collecting duct in accordance with Claims 1 through 4, characterized in that said swivel arms (1) are capable of being swung back into their base position transversely to the longitudinal direction of the gas collecting duct and are retained there by the aid of torsion springs (7, 8).

6. Gas collecting duct in accordance with Claim 5, characterized in that two torsion springs (7, 8) with opposite directions of force transmission are wound-up onto the vertical axles.

7. Gas collecting duct in accordance with Claims 1 and 3 through 6, characterized in that, at both sides of the gas collecting duct, swivel arms (1a) are mounted and so arranged as to be capable of being swung out by at least 90° from the transverse direction of said gas collecting duct into both longitudinal directions.

8. Gas collecting duct in accordance with Claims 1 to 7, characterized in that said swivel arms (101) on being swung out from their base position are carried and raised on a circular, upwards sloping plane, and that the plane with a small radius is arranged around the vertical axle (102).

9. Gas collecting duct in accordance with Claim 8, characterized in that compression springs (107) are located on the vertical axle (102) which push back said swivel arm (101) vertically downwards and thereby back into the base position after the gas transition car (10) has passed by.

**Revendications**

1. Collecteur (3) pour l'évacuation des émissions produites dans des cokeries à un dispositif fixe d'épuration des fumées, avec fente située à sa partie supérieure en sens longitudinal, cette fente étant recouverte d'une bande de couverture souple (4) qui s'étend également en sens longitudinal du collecteur, collecteur (3) caractérisé en ce qu'à intervalles réguliers, des dispositifs de retenue sont disposés le long du collecteur (3) pour empêcher le soulèvement de la bande (4) en cas de grand vent, dispositif qui se compose d'un ou plusieurs bras pivotants (1, 101) placés horizontalement au-dessus de la bande de couverture (4) en sens transversal du collecteur (3), ces bras pouvant pivoter autour de pivots verticaux (2, 102) situés sur le côté du collecteur (3).

2. Collecteur suivant la revendication 1, caractérisé en ce que les pivots verticaux (2, 102) sont placés sur le côté du collecteur (3) opposé à la batterie de fours à coke.

3. Collecteur suivant revendication 1 ou 2, caractérisé en ce que les bras pivotants (1, 101) peuvent être pivotés de 90° au minimum dans les deux directions en sens longitudinal à partir de leur position normale en sens transversal du collecteur (3).

4. Collecteur suivant la revendication 1, 2 ou 3, caractérisé en ce que des rouleaux déflecteurs (5, 105, 6, 106) sont disposés soit des deux côtés de l'extrémité libre, soit à l'extrémité libre des bras pivotants (1, 101).

5. Collecteur suivant les revendications 1 à 4, caractérisé en ce sens que les bras pivotants (1) sont ramenés à l'aide de ressorts de torsion (7, 8) dans leur position normale en sens transversal du collecteur et y sont maintenus.

6. Collecteur suivant la revendication 5, caractérisé en ce que deux ressorts de torsion (7, 8) dont les forces agissent en sens opposé sont montés sur les pivots verticaux (2).

7. Collecteur suivant les revendications 1, 3, 4, 5, 6, caractérisé en ce que les bras pivotants (1a) disposés de chaque côté du collecteur peuvent être pivotés d'au moins 90° dans les deux directions en sens longitudinal à partir de leur position normale en sens transversal du collecteur (3).

8. Collecteur suivant les revendications 1 à 7, caractérisé en ce que les bras pivotants (101) lors de leur pivotement hors de leur position normale sont guidés et soulevés par un plan incliné circulaire (108) de petit rayon qui est disposé autour du pivot vertical (102).

9. Collecteur suivant la revendication 8, caractérisé en ce que des ressorts de compression (107) sont montés sur le pivot vertical (102), ressorts qui poussent le bas pivotant (101) vers le bras et ainsi, après passage du chariot (10), le ramènent dans sa position normale.

# FIG. 1

FIG. 2

0 120 127

# FIG. 3

11  11  1  11  10  11  3  4  2  9

0 120 127

# FIG. 4

0 120 127

# Fig. 5

102

107

105

101

106

108

4

3

9

0 120 127